# EUROPEAN PATENT APPLICATION

(11) **EP 0 773 284 A1**
(43) Date of publication of application: **14.05.1997**
(21) Application number: 95203064.1
(22) Date of filing: 10.11.1995
(51) Int. Cl.: C11D 3/43, C11D 17/00, B01F 17/00, C11D 3/20

(54) **Microemulsion with high level of anionic surfactants, using branched fatty acids**

(71) Applicant: THE PROCTER & GAMBLE COMPANY, Cincinnati, Ohio 45202 (US)
(72) Inventor: Depoot, Karel J.M., B-8790 Waregem (BE); Boutique, Jean-Pol (NMN), B-5030 Gembloux (Ernage) (BE)
(74) Representative: Gibson, Tony Nicholas

(57) **Abstract**

The present invention relates to the use of branched fatty acids in microemulsions. More particularly, the replacement of linear fatty acids by these branched fatty acids allows to prepare microemulsions combining the benefits of high anionic surfactant level and of a water-insoluble organic solvent, at a reasonable pH. The present invention also provides detergent compositions comprising said microemulsion.

## Description

### FIELD OF THE INVENTION

The present invention relates to microemulsions for use in detergents. More in particular, the present invention relates to microemulsions containing a water-insoluble organic solvent, an anionic surfactant and branched fatty acids.

### BACKGROUND OF THE INVENTION

A great variety of microemulsions have been described in the art. By definition, a microemulsion is characterised by the diameter of droplets ranging from about 0.01 micron to 0.1 micron. At these levels, microemulsions are on the borderline between solubilisation and emulsification and, because de diameter is smaller than the wavelength, these systems are transparent. The small droplets size of microemulsions provides the benefit of greatly improved stability.

Microemulsions have heretofore been known in which water or various compositions of an essentially aqueous nature are dispersed in an oil phase. However, there had been only limited success in preparing microemulsions of an essentially lipophilic phase dispersed in water. One such example of an oil-in-water (o/w) microemulsion is set forth in the U.S. Pat. No 3,778,381. This patent describes the preparation of microemulsions of droplets of certain fluorinated organic compounds dispersed throughout an aqueous system.

Further, a method for the formation of oil-in-water microemulsion is described in U.S. Pat. 4,416,499. The preparation of oil-in-water microemulsions had been found to require selection of primary and secondary surfactants having the correct solubility relationships with respect to the oil and water systems and with respect with each other, proper selection of the order in which the various ingredients are combined and requires that before titration with a secondary solvent is undertaken, the oil-in-water system must first be converted into a finely divided lactescent emulsion.

The preparation of clear stable oil-in-water microemulsions requires a delicate balance of the respective volumes of the oil phase and the aqueous phase. This balance is difficult to obtain in microemulsions containing a high level of anionic surfactants without increasing the level of fatty acids. Such formula with an increased anionic surfactant level can be prepared provided that the pH remains sufficiently low. In practice however, these formulations are not actionable because of the excessive fatty acid and the required low pH.

Indeed, liquid detergent compositions comprising detersive surfactants, a high level of water-insoluble solvent and fatty acids have been disclosed in EP-0 137 616. The stability of this microemulsion at alkaline pH is provided by adding ionic strength ingredients in the aqueous phase and by an increased solvent polarity.

EP-0 160 762 describes a similar detergent formula where fatty acid/soap is also used as a detergency builder/emulsion stabiliser ingredient and where the stability of such microemulsion at high pH is assured by a substantial amount of fatty acid together with the presence of amines, quaternary ammonium salts and amines oxides.

It is thus an object of the present invention to formulate a microemulsion which overcomes the above drawbacks.

It has now been found that stable microemulsions containing high anionic surfactant level can be formulated by replacing linear fatty acids by branched fatty acids.

This finding allows to formulate microemulsions in which the lower level of branched fatty acids needed eliminates the inconvenience of the corresponding high level of linear fatty acids.

In addition, this finding allows the formulation of microemulsions at higher pH.

Examples of branched fatty acids are described in the US co-pending application 08/250069, for their quality of good grease emulsifiers. Branched fatty acids are reported to generate spontaneous emulsification of grease at natural pH.

### SUMMARY OF THE INVENTION

The microemulsion according to the present invention comprises :
- from 5 % to 40 % by weight of a water insoluble organic solvent;
- from 10 % to 40 % by weight of an anionic surfactant;
- from 5 % to 30 % by weight of a branched fatty acid.

### DETAILED DESCRIPTION OF THE INVENTION

The microemulsions of the present invention comprises a water-insoluble organic solvent, anionic surfactants and branched fatty acids.

### Water-insoluble organic solvent :

The water - insoluble organic solvent is present in the microemulsion of the present invention, at levels of from 5 % to 40 % by weight, preferably 5% to 20% by weight.

The solvents employed herein can be of any of the well-known "degreasing" solvents commonly known for use,in , for example, the commercial laundry and dry-cleaning industry, in the hard surface cleaner industry and the metalwork industry. Typically, such solvents comprise hydrocarbon or halogenated hydrocarbon moieities of the alkyl or cyclo-alkyl type, and have a boiling point well above room temperature.

The formulator of compositions of the present type will be guided in the selection of solvent partly by the need to provide good grease-cutting properties, and partly by aestetic considerations. For example, kerosene hydrocarbons function quite well in the present compositions, but can be malodorous. Kerosene can be used in commercial laundries. For home use, where malodors would not be tolerated, the formulator would be more likely to select solvents which have a relatively pleasant odor, or odors which can be reasonably modified by perfuming. Such solvents include, for example, the terpenes and terpenoid solvents obtainable from citrus fruits, especially orange terpenes and d-limonene. Benzyl alcohol is another relatively pleasant smelling solvent for use herein. Mixtures of orange terpene and benzyl alcohol are especially suitable for removing certain types of stains, e.g. marker ink, shoe polish, and dirty motor oil.

Accordingly, one preferred class of solvents used herein are the liquid paraffins, especially the "iso" C₁₀ paraffins and the mono- and bicyclic mono-terpenes, i.e. those of the hydrocarbon class, which include, for example, the terpinenes, limonenes and pinenes, and mixtures thereof. Highly preferred materials of this latter type are d-limonene and the mixture of terpene hydrocarbons obtained from the essence of oranges (e.g. cold-pressed orange terpenes and orange terpene oil phase ex fruit juice). Also useful are, for example, terpenes such as dipentene, alpha-pinene, beta-pinene and the mixture of terpene hydrocarbons expressed from lemons and grape-fruit. Also useful are C₆-C₁₂ alcohols.

Another preferred class of solvents are the C₆-C₉ alkyl aromatic hydrocarbons, especially the C₆-C₉ alkyl benzenes, in particular octyl benzene. Short chain alkyl benzenes (e.g. toluene) are not preferred herein due to toxicity and odor problems, and longer-chain alkyl benzenes have undesirable soil redeposition problems, especially when used to launder fabrics.

Still another preferred class of solvents are the olefins having a boiling point of at least about 100°C. The alpha-olefins have now been found to possess excellent cleaning properties and low, rather pleasant odors. The compounds 1-decene and 1-dodecene are especially preferred olefin solvents for laundry detergent use.

In a highly preferred mode, the relatively non-polar solvents, such as paraffin, olefin, terpene or alkyl benzene solvents mentioned above, are used in combination with a more polar solvent such as, for example, benzyl alcohol, n-hexanol, phthalic acid esters such as dimethyl-, diethyl- (preferred), dipropyl- or dibutyl phthalate, or the "Carbitol" solvents such as Butyl Carbitol (trade mark for 2-(2-butoxyethoxy)-ethanol) to provide broad-spectrum cleaning of a variety of polar and non-polar soils. Such mixtures will have a ratio of non-polar:polar solvent in the range of 10:1 to 1:10, preferably 5:1 to 1:5, and most preferably have a bit more non-polar than polar solvent, generally a ratio of 5:1 to 5:4, especially for fabric laundering.

### Anionic surfactants :

The microemulsion according to the present invention comprise an anionic surfactant.

Suitable anionic surfactants to be used are alkyl ester sulfonate surfactants including linear esters of C₈-C₂₀ carboxylic acids (i.e. fatty acids).

The preferred alkyl ester sulfonate surfactant, especially for laundry applications, comprise alkyl ester sulfonate surfactants of the structural formula : 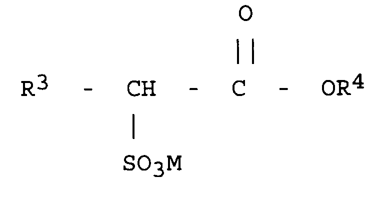 wherein R³ is a C₈-C₂₀ hydrocarbyl, preferably an alkyl, or combination thereof, R⁴ is a C₁-C₆ hydrocarbyl, preferably an alkyl, or combination thereof, and M is a cation which forms a water soluble salt with the alkyl ester sulfonate. Suitable salt-forming cations include metals such as sodium, potassium, and lithium, and substituted or unsubstituted ammonium cations, such as monoethanolamine, diethanolamine, and triethanolamine. Preferably, R³ is C₁₀-C₁₆ alkyl, and R⁴ is methyl, ethyl or isopropyl. Especially preferred are the methyl ester sulfonates wherein R³ is C₁₀-C₁₆ alkyl.

Other suitable anionic surfactants include the alkyl sulfate surfactants hereof are water soluble salts or acids of the formula ROSO₃M wherein R preferably is a C₁₀-C₂₄ hydrocarbyl, preferably an alkyl or hydroxyalkyl having a C₁₀-C₂₀ alkyl component, more preferably a C₁₂-C₁₈ alkyl or hydroxyalkyl, and M is H or a cation, e.g., an alkali metal cation (e.g. sodium, potassium, lithium), or ammonium or substituted ammonium (e.g. methyl-, dimethyl-, and trimethyl ammonium cations and quaternary ammonium cations such as tetramethyl-ammonium and dimethyl piperdinium cations and quaternary ammonium cations derived from alkylamines such as ethylamine, diethylamine, triethylamine, and mixtures thereof, and the like).

Alkyl alkoxylated sulfate surfactants hereof are water soluble salts or acids of the formula RO(A)ₘSO3M wherein R is an unsubstituted C₁₀-C₂₄ alkyl or hydroxyalkyl group having a C₁₀-C₂₄ alkyl component, preferably a C₁₂-C₂₀ alkyl or hydroxyalkyl, more preferably C₁₂-C₁₈ alkyl or hydroxyalkyl, A is an ethoxy or propoxy unit, m is greater than zero, typically between about 0.5 and about 6, more preferably between about 0.5 and about 3, and M is H or a cation which can be, for example, a metal cation (e.g., sodium, potassium, lithium, calcium, magnesium, etc.), ammonium or substituted-ammonium cation. Alkyl ethoxylated sulfates as well as alkyl propoxylated sulfates are contemplated herein. Specific examples of substituted ammonium cations include methyl-, dimethyl, trimethyl-ammonium cations and quaternary ammonium cations such as tetramethyl-ammonium and dimethyl piperdinium cations and those derived from alkylamines such as ethylamine, diethylamine, triethylamine, mixtures thereof, and the like. Exemplary surfactants are C₁₂-C₁₈ alkyl polyethoxylate (1.0) sulfate (C₁₂-C₁₈E(1.0)M), C₁₂-C₁₈ alkyl polyethoxylate (2.25) sulfate (C₁₂-C₁₈E(2.25)M), C₁₂-C₁₈ alkyl polyethoxylate (3.0) sulfate (C₁₂-C₁₈E(3.0)M), and C₁₂-C₁₈ alkyl polyethoxylate (4.0) sulfate (C₁₂-C₁₈E(4.0)M), wherein M is conveniently selected from sodium and potassium.

Other anionic surfactants include salts (including, for example, sodium, potassium, ammonium, and substituted ammonium salts such as mono-, di- and triethanolamine salts) of soap, C₉-C₂₀ linear alkylbenzenesulfonates, C₈-C₂₂ primary of secondary alkanesulfonates, C₈-C₂₄ olefinsulfonates, sulfonated polycarboxylic acids prepared by sulfonation of the pyrolyzed product of alkaline earth metal citrates, e.g., as described in British patent specification No. 1,082,179, C₈-C₂₄ alkylpolyglycolethersulfates (containing up to 10 moles of ethylene oxide); alkyl glycerol sulfonates, fatty acyl glycerol sulfonates, fatty oleyl glycerol sulfates, alkyl phenol ethylene oxide ether sulfates, paraffin sulfonates, alkyl phosphates, isethionates such as the acyl isethionates, N-acyl taurates, alkyl succinamates and sulfosuccinates, monoesters of sulfosuccinates (especially saturated and unsaturated C₁₂-C₁₈ monoesters) and diesters of sulfosuccinates (especially saturated and unsaturated C₆-C₁₂ diesters), acyl sarcosinates, sulfates of alkylpolysaccharides such as the sulfates of alkylpolyglucoside (the nonionic nonsulfated compounds being described below), branched primary alkyl sulfates, and alkyl polyethoxy carboxylates such as those of the formula RO(CH₂CH₂O)ₖ-CH₂COO-M+ wherein R is a C₈-C₂₂ alkyl, k is an integer from 0 to 10, and M is a soluble salt-forming cation. Resin acids and hydrogenated resin acids are also suitable, such as rosin, hydrogenated rosin, and resin acids and hydrogenated resin acids present in or derived from tall oil. Further examples are described in "Surface Active Agents and Detergents" (Vol. I and II by Schwartz, Perry and Berch). A variety of such surfactants are also generally disclosed in U.S. Patent 3,929,678, issued December 30, 1975 to Laughlin, et al. at Column 23, line 58 through Column 29, line 23.

Such anionic surfactants will generally be present in the microemulsion of the present invention in an amount from 10% to 40 % by weight, preferably 10 % to 20 % by weight.

### Branched fatty acids :

The branched fatty acids are present in the microemulsion of the present invention, at levels of from 5 % to 30 % by weight, preferably 15 % to 20 % by weight.

The term "branched fatty acids" herein encompasses a fatty acid selected from the group consisting of
A) C₁₀-C₁₆ secondary carboxyl materials of the formula R³ CH(R⁴)COOM, wherein R³ is CH₃(CH₂)x and R⁴ is CH₃(CH₂)_{y}, wherein y can be 0 or an integer from 1 to 6, x is an integer from 6 to 12 and the sum of (x + y) is 6-12, preferably 7-11, most preferably 8-9.
B) Carboxyl compounds wherein the carboxyl substituent is on a ring hydrocarbyl unit, i.e. branched fatty acids of the formula R⁵-R⁶-COOM, wherein R⁵ is C₇-C₁₀, preferably C₈-C₉, alkyl or alkenyl and R⁶ is a ring structure, such as benzene, cyclopentane, cyclohexane and the like. (Note : R⁵ can be in the ortho, meta or para position relative to the carboxyl on the ring).
C) C₁₀-C₁₈ primary and secondary carboxyl compounds of the formula R⁷CH(R⁸)COOM, wherein the sum of the carbons in R⁷ and R⁸ is 8-16, R⁷ is of the form CH₃-(CHR⁹)ₓ and R⁸ is of the form H-(CHR⁹)y, where x and y are integers in the range 0-15 and R⁹ is H or a C₁₋₄ linear or branched alkyl group. R⁹ can be any combination of H and C₁₋₄ linear or branched alkyl group members within a single - (CHR⁹)x,y group; however, each molecule in this class must contain at least one R⁹ that is not H. These types of molecules can be made by numerous methods, e.g. by hydroformylation and oxidation of branched olefins, hydroxycarboxylation of branched olefins, oxidation of the products of Guerbet reaction involving branched oxoalcohols. The branched olefins can be derived by oligomerization of shorter olefins, e.g. butene, isobutylene, branched hexene, propylene and pentene.
D) C₁₀-C₁₈ tertiary carboxyl compounds, e.g. neo-acids, of the formula R¹⁰CR¹¹(R¹²)COOM, wherein the sum of the carbons in R¹⁰, R¹¹ and R¹² is 8-16. R¹⁰, R¹¹ and R¹² are of the form CH₃-(CHR¹³)ₓ, where x is an integer in the range 0-13, and R¹³ is H or a C₁₋₄ linear of branched alkyl group. Not that R¹³ can be any combination of H and C₁₋₄ linear or branched alkyl group members within a single -(CHR¹³)ₓ group. These types of molecules result from addition of a carboxyl group to a branched olefin, e.g. by the Koch reaction. Commercial examples include the neodecanoic acid manufactured by Exxon, and the Versatic™ acids manufactured by Shell.

In each of the above formulas A, B, C and D, the species M can be any suitable, especially water-solubilizing, counterion, e.g. H, alkali metal, alkaline earth metal, ammonium, alkanolammonium, di- and tri-alkanolammonium, C1-C5 alkyl substituted ammonium and the like. Sodium is convenient, as is diethanolammonium.

Formula C class soaps comprise secondary carboxyl compounds of the formula CH₃(CHR)ₖ-(CH₂)ₘ-(CHR)ₙ-CH(COOM)(CHR)ₒ-(CH₂)ₚ-(CHR)_{q}-CH₃, wherein each R is C₁-C₄ alkyl, wherein k, n, o, q are integers in the range of 0-2, provided that the total number of carbon atoms (including the carboxylate) is in the range of 10 to 18.

Branched fatty acids for use herein are water-soluble members selected from the group consisting of the water-soluble salts of 2-methyl-1-undecanoic acid, 2-ethyl-1-decanoic acid, 2-propyl-1-nonanoic acid, 2-butyl-1-octanoic acid; 2-pentyl-1-heptanoic acid, 2-methyl-1-dodecanoic acid; 2-ethyl-1-undecanoic acid; 2-propyl-1-decanoic acid; 2-butyl-1-nonanoic acid; 2-pentyl-1-octanoic acid and mixtures thereof.

Preferred branched fatty acids are C₁₅-C₁₆. They can be employed in any water-soluble salt form, e.g. alkali metal, alkaline earth metals ammonium, alkanolammonium, dialkanol ammonium, trialkanol ammonium, 1-5 carbon alkyl substituted ammonium, basic amino acid groups, and the like; all of these counterions are well-known to manufacturers. The sodium salt form is convenient, cheap and effective. The acid form can also be used, but will usually be converted into the ionic form the pH adjustments which are made during processing of the compositions.

Highly preferred branched fatty acids are isotridecanoic acid (ex. Hoechst) or isopentadecanoic acid (ex. Hoechst)or mixtures thereof.

It must be noted that a mixture of linear acids and branched fatty acids can also be used. The pH in the formula will depend on the ration of these two components.

Because the composition as prepared are aqueous liquid formulations and since no particular mixing is required to form the o/w microemulsion, the compositions are easily prepared by combining all the ingredients in a suitable vessel or container. The order of mixing the ingredients is not particularly important and generally the various ingredients can be added sequentially or all at once or in the form of aqueous solutions of each.

In another embodiment, a liquid detergent composition is provided comprising the microemulsion according to the present invention. Said liquid detergent composition containing microemulsions with high anionic surfactants level and water - insoluble organic solvents, shows good performance on greasy oil removal and improves hydrophobic greasy soil removal upon pre treatment.

Indeed such formulations combining a high level of anionic surfactants and water-insoluble organic solvent have been found to give high performance benefits, especially upon pretreatment.

### Other detergent ingredients :

A typical listing of nonionic, ampholytic and zwitterionic classes, and species of these surfactants, is given in US Patent 3,664,961 issued to Norris on May 23, 1972.

One class of nonionic surfactants useful in the present invention are condensates of ethylene oxide with a hydrophobic moiety to provide a surfactant having an average hydrophilic-lipophilic balance (HLB) in the range from 8 to 17, preferably from 9.5 to 13.5, more preferably from 10 to 12.5. The hydrophobic (lipophilic) moiety may be aliphatic or aromatic in nature and the length of the polyoxyethylene group which is condensed with any particular hydrophobic group can be readily adjusted to yield a water-soluble compound having the desired degree of balance between hydrophilic and hydrophobic elements.

Especially preferred nonionic surfactants of this type are the C₉-C₁₅ primary alcohol ethoxylates containing 3-8 moles of ethylene oxide per mole of alcohol, particularly the C₁₄-C₁₅ primary alcohols containing 6-8 moles of ethylene oxide per mole of alcohol and the C₁₂-C₁₄ primary alcohols containing 3-5 moles of ethylene oxide per mole of alcohol.

Another class of nonionic surfactants comprises alkyl polyglucoside compounds of general formula

RO (CₙH₂ₙO)ₜZₓ

wherein Z is a moiety derived from glucose; R is a saturated hydrophobic alkyl group that contains from 12 to 18 carbon atoms; t is from 0 to 10 and n is 2 or 3; x is from 1.3 to 4, the compounds including less than 10% unreacted fatty alcohol and less than 50% short chain alkyl polyglucosides. Compounds of this type and their use in detergent are disclosed in EP-B 0 070 077, 0 075 996 and 0 094 118.

Also suitable as nonionic surfactants are poly hydroxy fatty acid amide surfactants of the formula 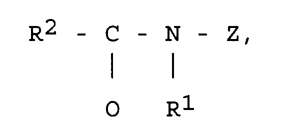 wherein R¹ is H, or R¹ is C₁₋₄ hydrocarbyl, 2-hydroxy ethyl, 2-hydroxy propyl or a mixture thereof, R² is C₅₋₃₁ hydrocarbyl, and Z is a polyhydroxyhydrocarbyl having a linear hydrocarbyl chain with at least 3 hydroxyls directly connected to the chain, or an alkoxylated derivative thereof. Preferably, R¹ is methyl, R² is a straight C₁₁₋₁₅ alkyl or alkenyl chain such as coconut alkyl or mixtures thereof, and Z is derived from a reducing sugar such as glucose, fructose, maltose, lactose, in a reductive amination reaction.

The compositions according to the present invention may further comprise a builder system. Any conventional builder system is suitable for use herein including aluminosilicate materials, silicates, polycarboxylates and fatty acids, materials such as ethylenediamine tetraacetate, metal ion sequestrants such as aminopolyphosphonates, particularly ethylenediamine tetramethylene phosphonic acid and diethylene triamine pentamethylenephosphonic acid. Though less preferred for obvious environmental reasons, phosphate builders can also be used herein.
Suitable builders can be an inorganic ion exchange material, commonly an inorganic hydrated aluminosilicate material, more particularly a hydrated synthetic zeolite such as hydrated zeolite A, X, B or HS.
Another suitable inorganic builder material is layered silicate, e.g. SKS-6 (Hoechst). SKS-6 is a crystalline layered silicate consisting of sodium silicate (Na₂Si₂O₅).
Suitable polycarboxylates builders for use herein include citric acid, preferably in the form of a water-soluble salt, derivatives of succinic acid of the formula R-CH(COOH)CH2(COOH) wherein R is C10-20 alkyl or alkenyl, preferably C12-16, or wherein R can be substituted with hydroxyl, sulfo sulfoxyl or sulfone substituents. Specific examples include lauryl succinate, myristyl succinate, palmityl succinate2-dodecenylsuccinate, 2-tetradecenyl succinate. Succinate builders are preferably used in the form of their water-soluble salts, including sodium, potassium, ammonium and alkanolammonium salts.
Other suitable polycarboxylates are oxodisuccinates and mixtures of tartrate monosuccinic and tartrate disuccinic acid such as described in US 4,663,071.
Especially for the liquid execution herein, suitable fatty acid builders for use herein are saturated or unsaturated C10-18 fatty acids, as well as the corresponding soaps. Preferred saturated species have from 12 to 16 carbon atoms in the alkyl chain. The preferred unsaturated fatty acid is oleic acid. Another preferred builder system for liquid compositions is based on dodecenyl succinic acid.
Other suitable water-soluble organic salts are the homo- or co-polymeric acids or their salts, in which the polycarboxylic acid comprises at least two carboxyl radicals separated from each other by not more than two carbon atoms.
Polymers of this type are disclosed in GB-A-1,596,756. Examples of such salts are polyacrylates of MW 2000-5000 and their copolymers with maleic anhydride, such copolymers having a molecular weight of from 20,000 to 70,000, especially about 40,000.

Detergency builder salts are normally included in amounts of from 10% to 80% by weight of the composition preferably from 20% to 70% and most usually from 30% to 60% by weight.

The composition according to the present invention may comprise a pH jump system. A preferred pH jump system comprises boric acid. The compositions are formulated at a pH below 7, preferably at a pH of 6.5. Upon dilution, these formulations provide a wash pH of at least 7.4. This pH jump allows compositions which are unstable at a certain pH to be formulated at a lower pH. The higher pH in the wash improves the removal of stains such as blood.

Other components used in detergent compositions may be employed, such enzymes (including proteases, amylases, lipases, cellulases peroxidases) and stabilizers or activators therefore, soil-suspending agents soil-release agents, optical brighteners, abrasives, bactericides, tarnish inhibitors, coloring agents, and perfumes.

Preferably, the liquid detergent compositions according to the present invention can also be in "concentrated form", in such case, the liquid detergent compositions according to the present invention will contain a lower amount of water, compared to conventional liquid detergents.

Typically, the water content of the concentrated liquid detergent is less than 30%, more preferably less than 20%, most preferably less than 10% by weight of the detergent composition.

The process and compositions of the invention can also be used as detergent additive products. Such additive products are intended to supplement or boost the performance of conventional detergent compositions.

The following examples are meant to exemplify compositions of the present inventions, but are not necessarily meant to limit the scope of the invention.

### EXAMPLE I

| Ingredient | | Parts of the total detergent composition |
|---|---|---|
| Anionic Surfactant | Dobanol C₁₂-C₁₅ AS (1) | 8 |
| | Lial C₁₂-C₁₅ AE3S | 12 |
| Nonionic Surfactant | | |
| | C₁₂/C₁₄-N-methyl glucose amide (2) | 5 |
| | Dobanol | 5 |
| Builders | Citric Acid | 3 |
| | Topped Palm Kernel Fatty Acid | 5 |
| Branched Fatty Acid | isotridecanoic acid | 12 |
| Solvents | Isopar G | 10 |
| | Ethanol | 1 |
| | Propane diol | 9 |
| | Water | 15 |
| Neutralizer | Monoethanolamine | 5 |
| | NaOH | 3 |
| | KOH | 1 |
| Performance Bootsers | | |
| | Diethylene tri-amine penta (methylene phosphonic acid)(3) | 1 |
| | Brightener | 0.1 |
| | Soil release polymer | 0.2 |
| | Ethoxylated polyamine | 0.6 |
| Enzyme | Protease | 0.5 |
| | Lipase | 0.2 |
| | Amylase | 0.1 |
| | Cellulase | 0.1 |
| Enzyme stabilizers | Boric Acid | 3 |
| Minors | | up to 100 |

| | | |
|---|---|---|
| (1) Produced by Shell | | |
| (2) Glucose Amide™ by Hoechst | | |
| (3) Briquest™ 543-45AS by Albright & Wilson Ltd | | |

The above composition is prepared by blending the indicated ingredients to provide a clear stable microemulsion. In laundry tests, the composition gives excellent performance especially in the area of hydrophobic greasy soil removal upon pretreatment.

### EXAMPLE II

| Ingredient | | Parts by weight |
|---|---|---|
| Anionic Surfactant | Oleoyl Sarcosine (1) | 9 |
| | Lial C₁₂-C₁₅ AE3S | 12 |
| Nonionic Surfactant | | |
| | C₁₂/C₁₄-N-methyl glucose amide (2) | 6 |
| | Dobanol | 3 |
| Builders | Citric Acid | 1 |
| Branched Fatty Acid | Isopentadecanoic acid | 17 |
| Solvents | Isopar G | 10 |
| | Ethanol | 3 |
| | Propane diol | 4 |
| | Water | 22 |
| Neutralizer | Monoethanolamine | 6 |
| | KOH | 1 |
| Performance Bootsers | | |
| | Diethylene tri-amine penta (methylene phosphonic acid)(3) | 1 |
| | Brightener | 0.15 |
| | Ethoxylated polyamine | 0.7 |
| Enzyme | Protease | 0.5 |
| | Lipase | 0.2 |
| | Amylase | 0.1 |
| | Cellulase | 0.1 |
| Enzyme stabilizers | Boric Acid | 3 |
| Minors | | up to 100 |

| | | |
|---|---|---|
| (1) Hamphosyl O™ by Hampshire | | |
| (2) Glucose Amide™ by Hoechst | | |
| (3) Briquest™ 543-45AS by Albright & Wilson Ltd | | |

The resulting product is a clear stable and homogeneous microemulsion.

### EXAMPLE III

The composition of example II is modified by the replacement of the nonionic surfactants used, by Marlipal™ 24/70 (Huls) at the same level and by a reduction of the neutralizer KOH to 0.35 % by weight. This composition gives similar results.

### EXAMPLE IV

| Ingredient | | Parts by weight |
|---|---|---|
| Anionic Surfactant | Oleoyl Sarcosine (1) | 11 |
| | Lial C₁₂-C₁₅ AE3S | 6 |
| Nonionic Surfactant | Marlipal™ (2) | 13 |
| Builders | Citric Acid | 1 |
| Branched Fatty Acid | Isopentadecanoic acid | 18 |
| Solvents | Isopar G | 9 |
| | Pdiol | 6 |
| | Water | 25 |
| Neutralizer | Monoethanolamine | 4 |
| | KOH | 1 |
| Performance Bootsers | | |
| | Diethylene tri-amine penta (methylene phosphonic acid)(3) | 0.9 |
| | Brightener | 0.2 |
| | Ethoxylated polyamine | 0.7 |
| Enzyme | Protease | 0.5 |
| | Lipase | 0.2 |
| | Amylase | 0.1 |
| | Cellulase | 0.1 |
| Enzyme stabilizers | Boric Acid | 3 |
| Minors | | up to 100 |

| | | |
|---|---|---|
| (1) Hamphosyl O™ by Hampshire | | |
| (2) Marlipal™ 24/70 by Huls | | |
| (2) Briquest™ 543-45AS by Albright & Wilson Ltd | | |

As another example, any of the two preceding examples may be modified by inverting the anionic surfactant ratio, by increasing the amount of nonionic surfactant and branched fatty acids and by suppressing solvent ethanol while maintaining the overall proportion of water - insoluble organic solvent.

## Claims

1. An oil-in-water microemulsion comprising
- From 5% to 40% by weight of a water - insoluble organic solvent
- from 10% to 40% by weight of an anionic surfactant;
- from 5% to 30% by weight of a branched fatty acid.

2. A microemulsion according to claim 1 wherein said water-insoluble organic solvent is present in a weight ratio of 5 % to 20 %.

3. A microemulsion according to claim 1 wherein said anionic surfactant is present in a weight ratio of 10 % to 20 %.

4. A microemulsion according to claim 1 wherein said branched fatty acid is present in a weight ratio of 15 % to 20 %.

5. A microemulsion according to claim 1 wherein said water-insoluble organic solvent is an isoparaffinic hydrocarbon.

6. A microemulsion according to claim 1 wherein said branched fatty acid is selected from isotridecanoic acid, isopentadecanoic acid or mixtures thereof.

7. A detergent additive which comprises the microemulsion according to claim 1-6.

8. A liquid detergent composition comprising the microemulsion according to claims 1-6.

9. A liquid detergent composition according to claim 8 further comprising non-ionic surfactants, builders, enzymes and other optional agents.

10. Use of the liquid detergent composition as defined in claims 8 and 9 for pretreatment of fabrics.
